# EUROPEAN PATENT APPLICATION

(11) **EP 3 018 975 A1**
(43) Date of publication of application: **11.05.2016**
(21) Application number: 14820496.9
(22) Date of filing: 02.07.2014
(51) Int. Cl.: H04W 92/18, H04M 11/00, H04W 48/12

(54) **USER EQUIPMENT, BASE STATION, AND PROCESSOR**

(30) Priority: 04.07.2013 JP 2013140638; 04.07.2013 JP 2013140642
(71) Applicant: Kyocera Corporation, Kyoto-shi, Kyoto 612-8501 (JP)
(72) Inventor: YAMAZAKI, Chiharu, Kyoto-shi Kyoto 612-8501 (JP); MORITA, Kugo, Kyoto-shi Kyoto 612-8501 (JP); FUJISHIRO, Masato, Kyoto-shi Kyoto 612-8501 (JP)
(74) Representative: Schwabe - Sandmair - Marx
(86) International application number: PCT/JP2014/067654
(87) International publication number: WO 2015/002234

(57) **Abstract**

An eNB 200 transmits a broadcast control signal commonly applied to all UEs 100 in a cell of the eNB 200 and an dedicated control signal dedicatedly applied to a UE 100 in the cell. A UE 100 receives the broadcast control signal and the dedicated control signal. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

## Description

### TECHNICAL FIELD

The present invention relates to a base station, a user terminal, and a processor used in a mobile communication system that supports D2D communication.

### BACKGROUND ART

In 3GPP (3rd Generation Partnership Project) which is a project aiming to standardize a mobile communication system, the introduction of Device to Device (D2D) communication is discussed as a new function after Release 12 (see Non Patent Document 1).

In the D2D communication, a plurality of proximal user terminals perform direct device-to-device communication without passing through a network. On the other hand, in cellular communication which is normal communication in a mobile communication system, a user terminal performs communication through a network.

In the D2D communication, since radio communication with low transmission power can be performed between proximal user terminals, power consumption of the user terminal and a load on the network can be reduced in comparison with the cellular communication.

### PRIOR ART DOCUMENT

### NON-PATENT DOCUMENT

Non Patent Document 1: 3GPP technical report "TR 22.803 V12.1.0" March, 2013

### SUMMARY OF THE INVENTION

To enhance a utilization efficiency of a radio resource, it is supposed that at least a part of a radio resource available for D2D communication is secured to overlap a radio resource available for cellular communication.

Therefore, in a mobile communication system that supports D2D communication, there is a problem that interference occurs between the cellular communication and the D2D communication. On the other hand, if complicated interference control is introduced to avoid interference occurring between the cellular communication and the D2D communication, then a process load increases due to the interference control.

Therefore, an object of the present invention is to provide a user terminal, a base station, and a processor with which it is possible to avoid interference occurring between cellular communication and D2D communication, without introducing complicated interference control.

### MEANS FOR SOLVING PROBLEM

A user terminal according to a first aspect is used in a mobile communication system that supports D2D communication that is direct Device-to-Device communication. The user terminal comprises: a receiver configured to receive, from a base station configured to manage a cell in which the user terminal exists, a broadcast control signal commonly applied to all the user terminals in the cell and an dedicated control signal dedicatedly applied to a user terminal in the cell. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

A base station according to a second aspect manages a cell, in a mobile communication system that supports D2D communication that is direct device-to-device communication. The base station comprises: a transmitter configured to transmit a broadcast control signal commonly applied to all the user terminals in the cell and an dedicated control signal dedicatedly applied to a user terminal in the cell. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

A processor according to a third aspect is provided in a user terminal used in a mobile communication system that supports D2D communication that is direct Device-to-Device communication. The processor executes a process of receiving, from a base station configured to manage a cell in which the user terminal exists, a broadcast control signal commonly applied to all the user terminals in the cell and an dedicated control signal dedicatedly applied to a user terminal in the cell. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

According to the present invention, it is possible to provide a user terminal, a base station, and a processor with which it is possible to avoid interference occurring between cellular communication and D2D communication, without introducing complicated interference control.

### BRIEF DESCRIPTION OF THE DRAWINGS

[Fig. 1] Fig. 1 is a configuration diagram of an LTE system according to first and second embodiments.
[Fig. 2] Fig. 2 is a block diagram of a UE according to the first and second embodiments.
[Fig. 3] Fig. 3 is a block diagram of an eNB according to the first and second embodiments.
[Fig. 4] Fig. 4 is a protocol stack diagram of a radio interface according to the first and second embodiments.
[Fig. 5] Fig. 5 is a configuration diagram of a radio frame according to the first and second embodiments.
[Fig. 6] Fig. 6 is a diagram for describing D2D communication according to the first and second embodiments.
[Fig. 7] Fig. 7 is a diagram for describing an operation environment according to the first and second embodiments.
[Fig. 8] Fig. 8 is a diagram for describing a specific example of a broadcast control signal according to the first and second embodiments.
[Fig. 9] Fig. 9 is a diagram for describing a specific example of a broadcast control signal according to the first embodiment.
[Fig. 10] Fig. 10 is a diagram for describing a specific example of an dedicated control signal according to the first and second embodiments.
[Fig. 11] Fig. 11 is a diagram for describing a specific example of the broadcast control signal according to the second embodiment.

### DESCRIPTION OF THE EMBODIMENT

### [Overview of First Embodiment]

A user terminal according to the first and second embodiments is used in a mobile communication system that supports D2D communication that is direct Device-to-Device communication. The user terminal comprises: a receiver configured to receive, from a base station configured to manage a cell in which the user terminal exists, a broadcast control signal commonly applied to all the user terminals in the cell and an dedicated control signal dedicatedly applied to a user terminal in the cell. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

In the first embodiment, the user terminal further comprises: a controller configured to select, on the basis of the plurality of D2D resource information received by the receiver, a radio resource used for the D2D communication. The controller selects, as the radio resource used for the D2D communication, a radio resource indicated by the specific D2D resource information, when the receiver receives the dedicated control signal including the instruction information.

In the second embodiment, each of the plurality of D2D resource information further indicates a transmission power parameter available for the D2D communication. The instruction information further instructs a use of a transmission power parameter indicated by specific D2D resource information, out of the plurality of D2D resource information.

In the second embodiment, the user terminal further comprises: a controller configured to select, on the basis of the plurality of D2D resource information received by the receiver, a radio resource and a transmission power parameter used for the D2D communication. The controller selects, as a radio resource and a transmission power parameter used for the D2D communication, the radio resource and the transmission power parameter indicated by the specific D2D resource information, when the receiver receives the dedicated control signal including the instruction information.

In the second embodiment, the transmission power parameter indicated by the specific D2D resource information is set to be low in transmission power in the D2D communication as compared to a transmission power parameter indicated by D2D resource information other than the specific D2D resource information.

In a modification of the second embodiment, the user terminal according to claim 3, wherein the transmission power parameter indicated by the specific D2D resource information is set to be high in transmission power in the D2D communication as compared to a transmission power parameter indicated by D2D resource information other than the specific D2D resource information.

A base station according to the first and second embodiments manages a cell, in a mobile communication system that supports D2D communication that is direct device-to-device communication. The base station comprises: a transmitter configured to transmit a broadcast control signal commonly applied to all the user terminals in the cell and an dedicated control signal dedicatedly applied to a user terminal in the cell. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

In the first embodiment, the base station further comprises: a controller configured to determine a user terminal that performs the D2D communication in the cell and that gives a large interference to cellular communication. The transmitter transmits to the user terminal determined by the controller the dedicated control signal including the instruction information.

In the second embodiment, each of the plurality of D2D resource information further indicates a transmission power parameter available for the D2D communication. The instruction information further instructs a use of a transmission power parameter indicated by specific D2D resource information, out of the plurality of D2D resource information.

In the second embodiment, the base station further comprises: a controller configured to determine a user terminal that performs the D2D communication in the cell and that gives a large interference to cellular communication. The transmitter transmits to the user terminal determined by the controller the dedicated control signal including the instruction information.

In the second embodiment, the transmission power parameter indicated by the specific D2D resource information is set to be low in transmission power in the D2D communication as compared to a transmission power parameter indicated by D2D resource information other than the specific D2D resource information.

In the modification of the second embodiment, the base station further comprises: a controller configured to determine a user terminal that performs the D2D communication in the cell and that does not give a large interference to cellular communication. The transmitter transmits to the user terminal determined by the controller the dedicated control signal including the instruction information.

In the modification of the second embodiment, the transmission power parameter indicated by the specific D2D resource information is set to be high in transmission power in the D2D communication as compared to a transmission power parameter indicated by D2D resource information other than the specific D2D resource information.

A processor according to the first and second embodiments is provided in a user terminal used in a mobile communication system that supports D2D communication that is direct Device-to-Device communication. The processor executes a process of receiving, from a base station configured to manage a cell in which the user terminal exists, a broadcast control signal commonly applied to all the user terminals in the cell and an dedicated control signal dedicatedly applied to a user terminal in the cell. The broadcast control signal includes a plurality of D2D resource information. Each of the plurality of D2D resource information indicates a radio resource available for the D2D communication. The dedicated control signal includes instruction information for instructing a use of a radio resource indicated by specific D2D resource information, out of the plurality of D2D resource information.

In the modification of the second embodiment, each of the plurality of D2D resource information further indicates a transmission power parameter available for the D2D communication. The instruction information further instructs a use of a transmission power parameter indicated by specific D2D resource information, out of the plurality of D2D resource information.

### [First Embodiment]

Hereinafter, a description will be provided for an embodiment in a case where the present invention is applied to an LTE system.

### (System Configuration)

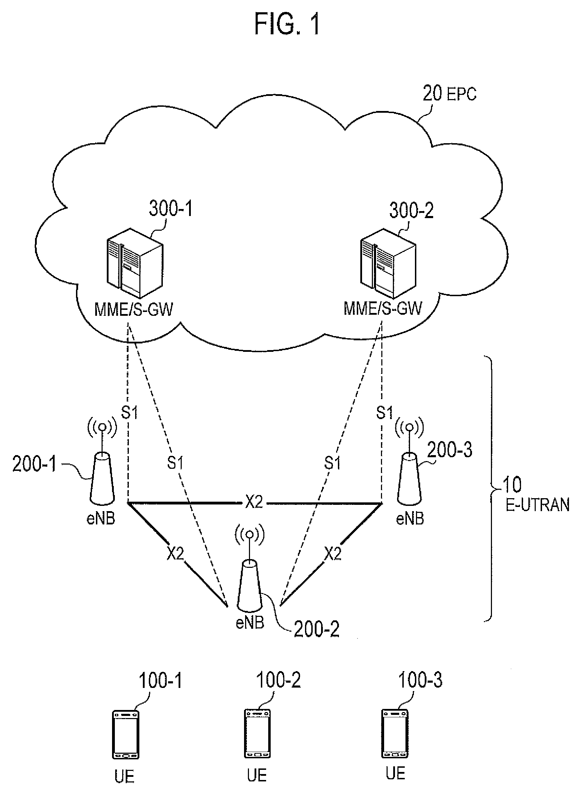

Fig. 1 is a configuration diagram of an LTE system according to the first embodiment. As illustrated in Fig. 1, the LTE system includes UEs (User Equipment) 100, E-UTRAN (Evolved Universal Terrestrial Radio Access Network) 10, and EPC (Evolved Packet Core) 20.

The UE 100 corresponds to a user terminal. The UE 100 is a mobile communication device and performs radio communication with a connecting cell (serving cell). A configuration of the UE 100 will be described below in detail.

The E-UTRAN 10 corresponds to a radio access network. The E-UTRAN 10 includes eNBs 200 (evolved Node-B). The eNB 200 corresponds to a base station. The eNBs 200 are connected to one another via an X2 interface. A configuration of the eNB 200 will be described below in detail.

The eNB 200 manages one or a plurality of cells and performs radio communication with the UE 100 which establishes a connection with the cell of the eNB 200. The eNB 200, for example, has a radio resource management (RRM) function, a routing function of user data, and a measurement control function for mobility control and scheduling. The "cell" is used as a term indicating a minimum unit of a radio communication area, and is also used as a term indicating a function of performing radio communication with the UE 100.

The EPC 20 corresponds to a core network. The E-UTRAN 10 and the EPC 20 configure a network of the LTE system. The EPC 20 includes a plurality of MME (Mobility Management Entity)/S-GWs (Serving-Gateway) 300. The MME performs various mobility controls and the like for the UE 100. The S-GW performs transfer control of user data. The MME/S-GW 300 is connected to eNBs 200 via an S1 interface.

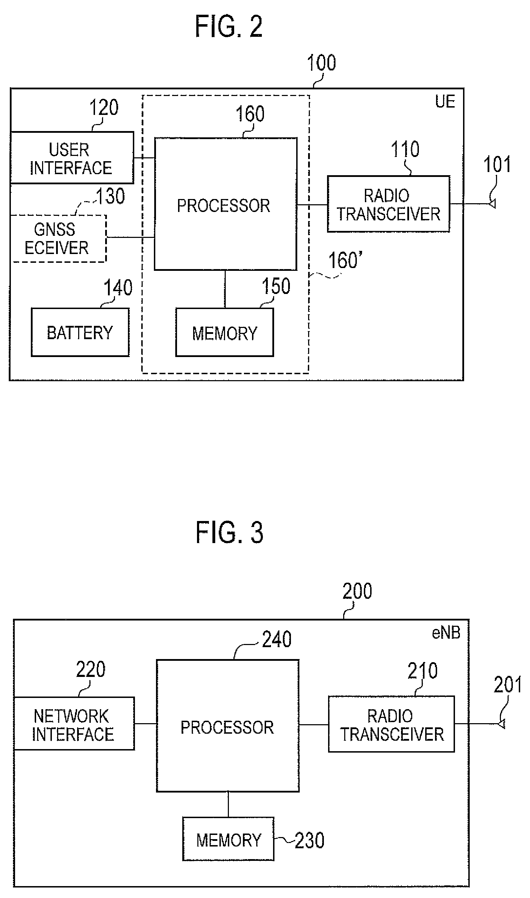

Fig. 2 is a block diagram of the UE 100. As illustrated in Fig. 2, the UE 100 includes an antenna 101, a radio transceiver 110, a user interface 120, a GNSS (Global Navigation Satellite System) receiver 130, a battery 140, a memory 150, and a processor 160. The memory 150 and the processor 160 configure a controller. The UE 100 may not have the GNSS receiver 130. Furthermore, the memory 150 may be integrally formed with the processor 160, and this set (that is, a chip set) may be called a processor 160' constituting a controller.

The antenna 101 and the radio transceiver 110 are used to transmit and receive a radio signal. The radio transceiver 110 converts a baseband signal (transmission signal) output from the processor 160 into the radio signal, and transmits the radio signal from the antenna 101. Furthermore, the radio transceiver 110 converts the radio signal received by the antenna 101 into the baseband signal (reception signal), and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols, which will be described later.

Fig. 3 is a block diagram of the eNB 200. As illustrated in Fig. 3, the eNB 200 includes an antenna 201, a radio transceiver 210, a network interface 220, a memory 230, and a processor 240. The memory 230 and the processor 240 constitute a controller. It is noted that the memory 230 may be integrally formed with the processor 240, and this set (that is, a chip set) may be called a processor constituting a controller.

The antenna 201 and the radio transceiver 210 are used to transmit and receive a radio signal. The radio transceiver 210 converts a baseband signal (transmission signal) output from the processor 240 into the radio signal, and transmits the radio signal from the antenna 201. Furthermore, the radio transceiver 210 converts the radio signal received by the antenna 201 into the baseband signal (reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols, which will be described later.

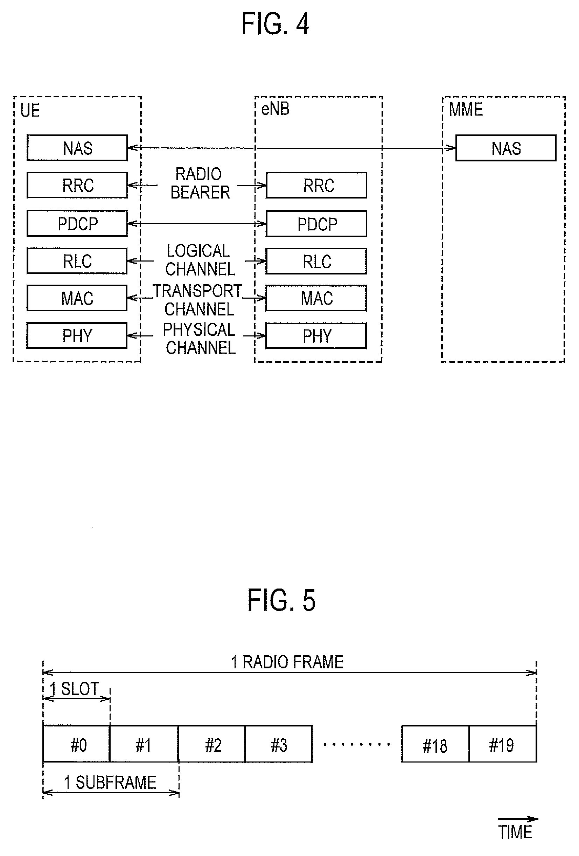

Fig. 4 is a protocol stack diagram of a radio interface in the LTE system. As illustrated in Fig. 4, the radio interface protocol is classified into a layer 1 to a layer 3 of an OSI reference model, wherein the layer 1 is a physical (PHY) layer. The layer 2 includes an MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and control signal are transmitted via the physical channel.

The MAC layer performs priority control of data, and a retransmission process and the like by hybrid ARQ (HARQ). Between the MAC layer of the UE 100 and the MAC layer of the eNB 200, user data and control signal are transmitted via a transport channel. The MAC layer of the eNB 200 includes a transport format of an uplink and a downlink (a transport block size and a modulation and coding scheme) and a scheduler for determining a resource block to be assigned to the UE100.

The RLC layer transmits data to an RLC layer of a reception side by using the functions of the MAC layer and the PHY layer. Between the RLC layer of the UE 100 and the RLC layer of the eNB 200, user data and control signal are transmitted via a logical channel.

The PDCP layer performs header compression and decompression, and encryption and decryption.

The RRC layer is defined only in a control plane dealing with a control signal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When there is an connection (RRC connection) between the RRC of the UE 100 and the RRC of the eNB 200, the UE 100 is in a connected state (an RRC connected state), and when there is no connection (no RRC connection), the UE 100 is in an idle state (an RRC idle state).

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink (DL), and SC-FDMA (Single Carrier Frequency Division Multiple Access) is applied to an uplink (UL), respectively.

As illustrated in Fig. 5, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RB) in a frequency direction, and a plurality of symbols in the time direction. Each resource block includes a plurality of subcarriers in the frequency direction. A radio resource unit is configured by one subcarrier and one symbol and one subcarrier.

Among radio resources allocated to the UE 100, a frequency resource can be configured by a resource block and a time resource can be configured by a subframe (or slot).

In the DL, an interval of several symbols from the head of each subframe is a region used as a physical downlink control channel (PDCCH) for mainly transmitting a control signal. Furthermore, the other portion of each subframe is a region available as a physical downlink shared channel (PDSCH) for mainly transmitting user data.

In the UL, both ends in the frequency direction of each subframe are regions used as a physical uplink control channel (PUCCH) for mainly transmitting a control signal. The central portion of each subframe is a region available as a physical uplink shared channel (PUSCH) for mainly transmitting user data.

### (Operation according to first embodiment)

### (1) D2D communication

An LTE system according to the first embodiment supports D2D communication that is direct device-to-device communication (UE-to-UE communication). Here, the D2D communication is described in comparison with cellular communication that is normal communication of the LTE system. The cellular communication is a communication mode in which a data path passes through a network (E-UTRAN 10, EPC 20). The data path is a communication path for user data. On the other hand, the D2D communication is a communication mode in which a data path set between UEs does not pass through the network.

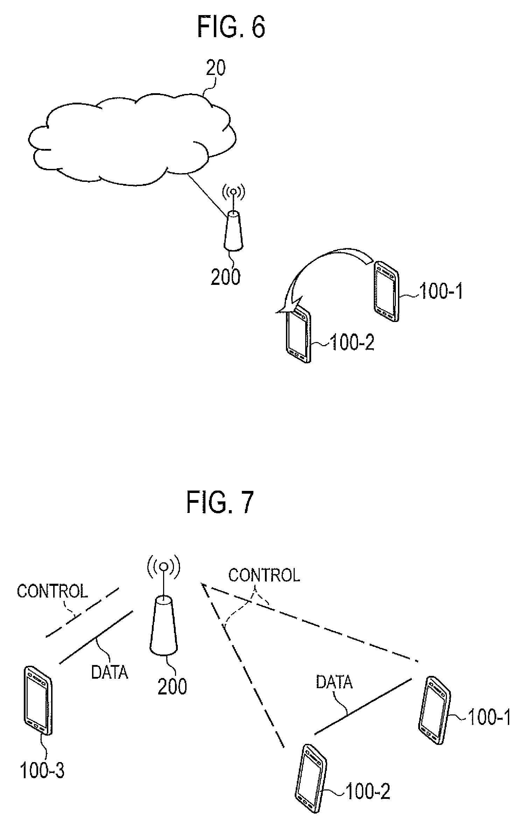

Fig. 6 is a diagram for describing the D2D communication. As shown in Fig. 6, in the D2D communication, a data path does not pass through the eNB 200. A UE 100-1 and a UE 100-2 proximal to each other directly perform radio communication with low transmission power in a cell of the eNB 200. Thus, when the proximal UE 100-1 and UE 100-2 directly perform radio communication with low transmission power, it is possible to reduce a power consumption of the UE 100 and to reduce interference to a neighboring cell, in comparison with in the cellular communication.

### (2) Operation overview

Fig. 7 is a diagram for describing an operation environment according to the first embodiment.

As shown in Fig. 7, the UE 100-1 to a UE 100-3 exist in a cell managed by the eNB 200. Here, when "existing" is mentioned, whether or not the UE 100 is in an idle state or in a connected state is not a concern. However, in the first embodiment, a case is assumed where in the cell managed by the eNB 200, the UE 100-1 to the UE 100-3 are in a connected state.

The UE 100-1 and the UE 100-2 perform the D2D communication. The UE 100-1 and the UE 100-2 transmit and receive user data with each other, and transmit and receive a control signal with the eNB 200. On the other hand, the UE 100-3 performs cellular communication. The UE 100-3 transmits and receives the user data and the control signal with the eNB 200.

In the first embodiment, to enhance a utilization efficiency of a radio resource, at least a part of the radio resource available for D2D communication is secured to overlap the radio resource available for cellular communication. For example, the radio resource available for the D2D communication is at least a part of a radio resource available for an uplink of the cellular communication (uplink radio resource). Alternatively, the radio resource available for the D2D communication is at least a part of a radio resource available for a downlink of the cellular communication (downlink radio resource).

In the first embodiment, with the following operation, it is possible to avoid interference between the cellular communication and the D2D communication. The eNB 200 according to the first embodiment transmits a broadcast control signal applied commonly to all the UEs 100 within its own cell and a dedicated control signal applied dedicatedly to the UE 100 within the cell. The broadcast control signal is, for example, a system information block (SIB). The dedicated control signal is, for example, an RRC message. The UE 100 receives from the eNB 200 the broadcast control signal and the dedicated control signal.

In the first embodiment, the broadcast control signal includes a plurality of D2D resource information. Each of the plurality of D2D resource information indicates the radio resource available for the D2D communication. As a result, the UE 100 that performs the D2D communication (hereinafter, referred to as "D2D UE") is capable of, on the basis of the plurality of D2D resource information included in the broadcast control signal, autonomously performing the D2D communication within a range of the radio resource available for the D2D communication. Thus, the eNB 200 is capable of omitting a dynamic scheduling in the D2D communication, and thus, it is possible to reduce a process load and an overhead.

In the first embodiment, the dedicated control signal includes instruction information for instructing the use of a radio resource indicated by specific D2D resource information (hereinafter, referred to as "specific radio resource"), out of the plurality of D2D resource information. As a result, for example, when the D2D UE having a large interference with the cellular communication is caused to use the specific radio resource, it is possible to gather the large interference between the cellular communication and the D2D communication into the specific radio resource. Thus, it is possible to stably employ a radio resource other than the specific radio resource in the cellular communication.

In the first embodiment, the D2D UE selects the radio resource used for the D2D communication, on the basis of the plurality of D2D resource information included in the broadcast control signal. The D2D UE selects the radio resource used for the D2D communication, out of a radio resource indicated by each of the plurality of D2D resource information. Alternatively, the D2D UE may select the radio resource used for the D2D communication, out of a radio resource indicated by the D2D resource information other than specific D2D resource information. However, when the D2D UE receives the dedicated control signal including the instruction information, the radio resource used for the D2D communication is limited to the specific radio resource.

In the first embodiment, the eNB 200 determines the D2D UE giving a large interference to cellular communication (hereinafter, referred to as "interfering D2D UE"), out of the D2D UEs within its own cell. Here, the "large interference" means, for example, interference with a level by which it is not possible for a communication quality of the cellular communication to satisfy a required quality. The eNB 200 determines an interfering D2D UE on the basis of a report from a cellular UE. Alternatively, the eNB 200 may determine an interfering D2D UE on the basis of a reference signal received from a D2D UE. The eNB 200 transmits a dedicated control signal including instruction information, to an interfering D2D UE.

### (3) Specific Example

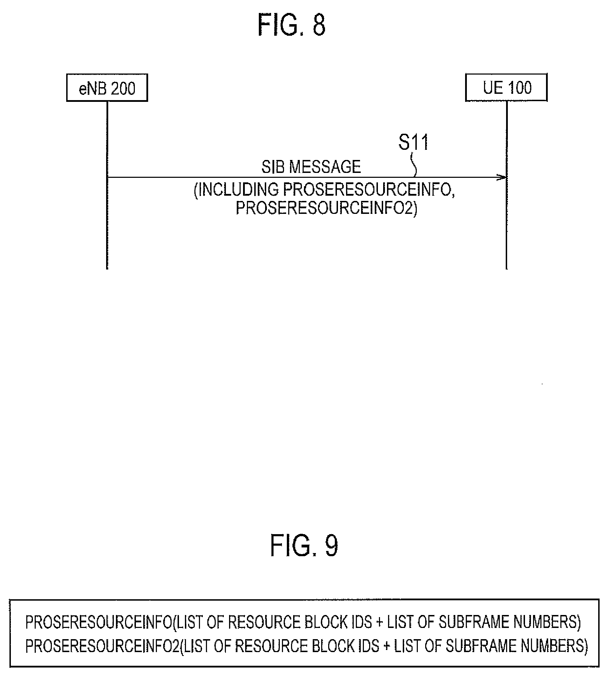

Next, an operation according to the first embodiment will be described with a specific example. Fig. 8 and Fig. 9 are diagrams for describing a specific example of the broadcast control signal. In Fig. 8, the UE 100 is the D2D UE.

As shown in Fig. 8, in step S11, the eNB 200 transmits an SIB message (broadcast control signal) including the plurality of D2D resource information. The UE 100 receives the SIB message including the plurality of D2D resource information.

As shown in Fig. 9, the SIB message includes "ProSeResourceInfo" and "ProSeResourceInfo2", as the plurality of D2D resource information.

The "ProSeResourceInfo" is information indicating the radio resource available for the D2D communication. The "ProSeResourceInfo" includes a list of each of a resource block number (resource block ID) and a subframe number available for the D2D communication.

The "ProSeResourceInfo2" is information indicating the specific radio resource, out of the radio resources available for the D2D communication. The "ProSeResourceInfo2" includes a list of each of a resource block number (resource block ID) and a subframe number corresponding to the specific radio resource. In the first embodiment, the radio resource indicated by the "ProSeResourceInfo2," (specific radio resource) does not overlap the radio resource indicated by the "ProScResourceInfo".

The UE 100 selects the radio resource used for the D2D communication, on the basis of the "ProSeResourceInfo" and the "ProSeResourceInfo2" included in the SIB message. The UE 100 selects the radio resource used for the D2D communication, out of the radio resource indicated by each of the "ProSeResourceInfo" and the "ProSeResourceInfo2". Alternatively, the UE 100 may select the radio resource used for the D2D communication, out of the radio resource indicated by the "ProSeResourceInfo".

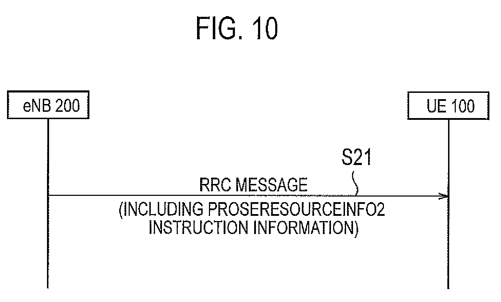

Fig. 10 is a diagram for describing a specific example of the dedicated control signal. In Fig. 10, the UE 100 is a D2D UE.

As shown in Fig. 10, in step S21, the eNB 200 transmits to the UE 100 an RRC message (dedicated control signal) including "ProSeResourceInfo2 instruction information" for instructing the use of the radio resource (specific radio resource) indicated by the "ProSeResourceInfo2." As described above, the eNB 200 transmits to the UE 100 the RRC message including the "ProSeResourceInfo2 instruction information" when determining that the UE 100 is an interfering D2D UE.

The UE 100 receives the RRC message including the "ProSeResourceInfo2 instruction information". When receiving the RRC message including the "ProSeResourceInfo2 instruction information", the UE 100 selects the radio resource used for the D2D communication, out of the radio resource (specific radio resource) indicated by the "ProSeResourceInfo2".

### (Summary of first embodiment)

As described above, the broadcast control signal includes the plurality of D2D resource information. Each of the plurality of D2D resource information indicates the radio resource available for the D2D communication. As a result, the D2D UE is capable of, on the basis of the plurality of D2D resource information included in the broadcast control signal, autonomously performing the D2D communication within a range of the radio resource available for the D2D communication. Thus, the eNB 200 is capable of omitting a dynamic scheduling in the D2D communication, and thus, it is possible to reduce a process load and an overhead.

Further, the dedicated control signal includes the instruction information for instructing the use of the specific radio resource indicated by the specific D2D resource information, out of the plurality of D2D resource information. As a result, for example, when the D2D UE having a large interference with the cellular communication is caused to use the specific radio resource, it is possible to gather the large interference between the cellular communication and the D2D communication into the specific radio resource. Thus, it is possible to stably employ a radio resource other than the specific radio resource in the cellular communication.

Therefore, in the embodiment, it is possible to avoid the interference occurring between the cellular communication and the D2D communication without introducing complicated interference control.

### [Second Embodiment]

Next, a second embodiment will be described with a focus on a difference from the first embodiment, and an overlapping description will not be provided.

### (1) Operation overview

In the first embodiment, each of the plurality of D2D resource information indicates the radio resource available for the D2D communication; however, in the second embodiment, each of the plurality of D2D resource information indicates not only the radio resource but also a transmission power parameter. As a result, the D2D UE that performs the D2D communication is capable of, on the basis of the plurality of D2D resource information included in the broadcast control signal, autonomously performing the D2D communication within a range of the radio resource and the transmission power parameter available for the D2D communication.

Further, in the second embodiment, the dedicated control signal includes instruction information for instructing the use of the specific radio resource and the transmission power parameter (hereinafter, referred to as "specific transmission power parameter") indicated by the specific D2D resource information out of the plurality of D2D resource information.

The transmission power parameter (specific transmission power parameter) indicated by the specific D2D resource information is set to be low in transmission power in the D2D communication as compared to the transmission power parameter indicated by the D2D resource information other than the specific D2D resource information, below. As a result, it is possible to lower the transmission power for the D2D communication in the specific radio resource, and thus, it is possible to gather the large interference between the cellular communication and the D2D communication into the specific radio resource and restrain such interference.

In the second embodiment, the D2D UE selects the radio resource and the transmission power parameter used for the D2D communication, on the basis of the plurality of D2D resource information included in the broadcast control signal. The D2D UE selects the radio resource and the transmission power parameter used for the D2D communication, out of the radio resource and the transmission power parameter indicated by each of the plurality of D2D resource information. Alternatively, the D2D UE may select the radio resource used for the D2D communication, out of the radio resource and the transmission power parameter indicated by the D2D resource information other than specific D2D resource information. However, when the D2D UE receives the dedicated control signal including the instruction information, the radio resource used for the D2D communication is limited to the specific radio resource, and the transmission power parameter used for the D2D communication is limited to the specific transmission power parameter.

### (2) Specific Example

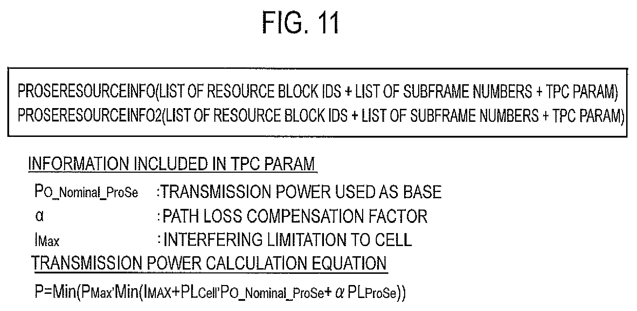

Next, an operation according to the second embodiment will be described with a specific example. Fig. 11 is a diagram for describing a specific example of the broadcast control signal.

As shown in Fig. 11, "ProSeResourceInfo" is information indicating the radio resource and the transmission power parameter available for the D2D communication. The "ProSeRessourceInfo" includes a list of each of a resource block number (resource block ID) and a subframe number available for the D2D communication, and "TPC param" that is the transmission power parameter. The "TPC param" includes at least one of "PO_Nominal_ProSe" indicting the transmission power that is a base in the D2D communication, "α" indicating a path loss compensation factor, and "IMax" indicating an interfering limitation to the cell. The transmission power of the D2D communication is determined in accordance with a transmission power calculation equation shown in Fig. 8 by using these transmission power parameters.

"ProSeResourceInfo2" is information indicating the specific radio resource and the specific transmission power parameter. The "ProSeResourceInfo2" includes the "TPC param" (specific transmission power parameter). The "TPC param" included in the "ProSeResourceInfo2" includes at least one of the "PO_Nominal_ProSe", the "α", and the "IMax". The "TPC param" included in the "ProSeResourceInfo2" is set to be low in transmission power in the D2D communication, as compared to the "TPC param" included in the "ProSeResourceInfo". For example, the "PO_Nominal_ProSe" included in the "ProSeResourceInfo2" is lower in value than the "PO_Nominal_ProSe" included in the "ProSeResourceInfo". Alternatively, the "IMax" included in the "ProSeResourceInfo2" is lower in value than the "IMax" included in the "ProSeResourceInfo".

The UE 100 selects the radio resource and the transmission power parameter used for the D2D communication, on the basis of the "ProSeResourceInfo" and the "ProSeResourceInfo2" included in the SIB message. The UE 100 selects the radio resource and the transmission power parameter used for the D2D communication, out of the radio resource and the transmission power parameter indicated by each of the "ProSeResourceInfo" and the "ProSeResourceInfo2". Alternatively, either one of the "ProSeResourceInfo" and the "ProSeResourceInfo2", which has a larger communication capacity in accordance with a channel situation of the D2D communication, may be selected.

In the second embodiment, in Fig. 10, in step S21, the eNB 200 transmits to the UE 100 an RRC message (dedicated control signal) including the "ProSeResourceInfo2 instruction information" for instructing the use of the specific radio resource and the specific transmission power parameter indicated by the "ProSeResourceInfo2".

The UE 100 receives the RRC message including the "ProSeResourceInfo2 instruction information". When receiving the RRC message including the "ProSeResourceInfo2 instruction information", the UE 100 selects the radio resource used for the D2D communication, out of the specific radio resource indicated by the "ProSeResourceInfo2", and determines, by the specific transmission power parameter, the transmission power used for the D2D communication.

### (Summary of second embodiment)

As described above, the broadcast control signal includes the plurality of D2D resource information. Each of the plurality of D2D resource information indicates the radio resource and the transmission power parameter available for the D2D communication. As a result, the D2D UE is capable of, on the basis of the plurality of D2D resource information included in the broadcast control signal, autonomously performing the D2D communication within a range of the radio resource available for the D2D communication and the transmission power parameter. Thus, the eNB 200 is capable of omitting a dynamic scheduling in the D2D communication, and thus, it is possible to reduce a process load and an overhead.

Further, the dedicated control signal includes the instruction information for instructing the use of the specific radio resource and the specific transmission power parameter indicated by the specific D2D resource information, out of the plurality of D2D resource information. As a result, for example, when the D2D UE having a large interference with the cellular communication is caused to use the specific radio resource, it is possible to gather the large interference between the cellular communication and the D2D communication into the specific radio resource. Thus, it is possible to stably employ a radio resource other than the specific radio resource in the cellular communication.

In the first embodiment, the specific transmission power parameter is set to be low in transmission power in the D2D communication, as compared to the transmission power parameter indicated by the D2D resource information other than the specific D2D resource information. As a result, it is possible to lower the transmission power for the D2D communication in the specific radio resource, and thus, it is possible to gather the large interference between the cellular communication and the D2D communication into the specific radio resource and restrain such interference.

Therefore, it is possible to avoid the interference occurring between the cellular communication and the D2D communication without introducing complicated interference control.

### (Modification of second embodiment)

Next, a modification of the second embodiment will be described with a focus on a difference from the second embodiment. In the present modification, a system configuration, an operation environment, and a message format are similar to those in the second embodiment.

In the present modification, the D2D UE selects the radio resource and the transmission power parameter used for the D2D communication, on the basis of the plurality of D2D resource information included in the SIB message (broadcast control signal). In the present modification, the D2D UE may select the radio resource used for the D2D communication, out of the radio resource and the transmission power parameter indicated by the D2D resource information other than specific D2D resource information. However, when the D2D UE receives the RRC message including the "ProSeResourceInfo2 instruction information", the radio resource used for the D2D communication is limited to the specific radio resource, and the transmission power parameter used for the D2D communication is limited to the specific transmission power parameter.

In the present modification, the specific transmission power parameter indicated by the specific D2D resource information is set to be high in transmission power in the D2D communication as compared to the transmission power parameter indicated by the D2D resource information other than the specific D2D resource information. For example, "PO_Nominal_ProSe" included in "ProSeResourceInfo2" is higher in value than "PO_Nominal_ProSe" included in "ProSeResourceInfo". Alternatively, "IMax" included in the "ProSeResourceInfo2" is higher in value than "IMax" included in the "ProSeResourceInfo".

In the present modification, the eNB 200 determines the D2D UE not giving a large interference to the cellular communication (hereinafter, referred to as "low-interference D2D UE"), out of the D2D UEs within its own cell. Here, the "large interference" means, for example, interference with a level by which it is not possible for a communication quality of the cellular communication to satisfy a required quality. The eNB 200 determines a low-interference D2D UE on the basis of a report from a cellular UE. Alternatively, the eNB 200 may determine a low-interference D2D UE on the basis of a reference signal received from a D2D UE. The eNB 200 transmits to the low-interference D2D UE an RRC message (dedicated control signal) including "ProSeResourceInfo2 instruction information".

Thus, in the present modification, at an early stage of starting the D2D communication, for example, the D2D UE is caused to use the radio resource other than the specific radio resource to determine the degree of interference to the cellular communication. Then, the D2D UE that does not give the large interference to the cellular communication is moved to the specific radio resource. The radio resource other than the specific radio resource is set low in transmission power in the D2D communication, as compared to the specific radio resource, and thus, it is possible to restrain the interference given to the cellular communication.

### [Other Embodiments]

In each of the above-described embodiments, the radio resource indicated by the "ProSeResourceInfo2" (specific radio resource) does not overlap the radio resource indicated by the "ProSeResourceInfo"; however, this is not limiting, and either one of the following relationships may be possible.
- The radio resource indicated by "ProSeResourceInfo2" (specific radio resource) overlaps the radio resource indicated by "ProSeResourceInfo". In this case, overlapping includes not only partial overlapping but also complete matching.
- The radio resource indicated by "ProSeResourceInfo2" (specific radio resource) is contained in the radio resource indicated by "ProSeResourceInfo".
- The radio resource indicated by "ProSeResourceInfo" is contained in the radio resource indicated by "ProSeResourceInfo2" (specific radio resource). In this case, in the first embodiment, it may be possible that the radio resource indicated by the "ProSeResourceInfo" is used and the D2D UE not giving the interference to the cellular communication is transferred to the radio resource indicated by the "ProSeResourceInfo2" (specific radio resource).

In each of the above-described embodiments, an example is described where the dedicated control signal is the RRC message; however, the dedicated control signal may be a downlink control signal (DCI) transmitted on PDCCH.

In each of the above-described embodiments, as a specific example of the plurality of D2D resource information, "ProSeResourceInfo" and "ProSeResourceInfo2" are described; however, in addition to these, "ProSeResourceInfo3", "ProSeResourceInfo4" ... may be defined. In this case, in the second embodiment, a transmission power parameter indicated by each of the "ProSeResourceInfo2", the "ProSeResourceInfo3", the "ProSeResourceInfo4" ... may be a different value, and the same value as the "ProSeResourceInfo2".

In each of the above-described embodiments, as one example of the cellular communication system, the LTE system is described; however, the present invention is not limited to the LTE system, and the present invention may be applied to systems other than the LTE system.

It is noted that the entire content of Japanese Patent Application No. 2013-140638 (filed on July 4, 2013) and Japanese Patent Application No. 2013-140642 (filed on July 4, 2013) is incorporated in the present specification by reference.

### INDUSTRIAL APPLICABILITY

Thus, a user terminal, a base station, and a processor according to the present invention, are useful in mobile communication field because it is possible to avoid interference occurring between cellular communication and D2D communication, without introducing complicated interference control.

## Claims

1. A user terminal used in a mobile communication system that supports D2D communication that is direct Device-to-Device communication, comprising:
a receiver configured to receive, from a base station configured to manage a cell in which the user terminal exists, a broadcast control signal commonly applied to all the user terminals in the cell and a dedicated control signal dedicatedly applied to a user terminal in the cell, wherein
the broadcast control signal includes a plurality of D2D resource information,
each of the plurality of D2D resource information indicates a radio resource available for the D2D communication, and
the dedicated control signal includes instruction information for instructing a use of a radio resource indicated by specific D2D resource information, out of the plurality of D2D resource information.

2. The user terminal according to claim 1, further comprising: a controller configured to select, on the basis of the plurality of D2D resource information received by the receiver, a radio resource used for the D2D communication, wherein
the controller selects, as the radio resource used for the D2D communication, a radio resource indicated by the specific D2D resource information, when the receiver receives the dedicated control signal including the instruction information.

3. The user terminal according to claim 1, wherein each of the plurality of D2D resource information further indicates a transmission power parameter available for the D2D communication, and
the instruction information further instructs a use of a transmission power parameter indicated by specific D2D resource information, out of the plurality of D2D resource information.

4. The user terminal according to claim 3, further comprising: a controller configured to select, on the basis of the plurality of D2D resource information received by the receiver, a radio resource and a transmission power parameter used for the D2D communication, wherein
the controller selects, as a radio resource and a transmission power parameter used for the D2D communication, the radio resource and the transmission power parameter indicated by the specific D2D resource information, when the receiver receives the dedicated control signal including the instruction information.

5. The user terminal according to claim 3, wherein the transmission power parameter indicated by the specific D2D resource information is set to be low in transmission power in the D2D communication as compared to a transmission power parameter indicated by D2D resource information other than the specific D2D resource information.

6. The user terminal according to claim 3, wherein the transmission power parameter indicated by the specific D2D resource information is set to be high in transmission power in the D2D communication as compared to a transmission power parameter indicated by D2D resource information other than the specific D2D resource information.

7. A base station configured to manage a cell, in a mobile communication system that supports D2D communication that is direct device-to-device communication, the base station comprising:
a transmitter configured to transmit a broadcast control signal commonly applied to all the user terminals in the cell and a dedicated control signal dedicatedly applied to a user terminal in the cell, wherein
the broadcast control signal includes a plurality of D2D resource information,
each of the plurality of D2D resource information indicates a radio resource available for the D2D communication, and
the dedicated control signal includes instruction information for instructing a use of a radio resource indicated by specific D2D resource information, out of the plurality of D2D resource information.

8. The base station according to claim 7, further comprising: a controller configured to determine a user terminal that performs the D2D communication in the cell and that gives a large interference to cellular communication, wherein
the transmitter transmits to the user terminal determined by the controller the dedicated control signal including the instruction information.

9. The base station according to claim 7, wherein each of the plurality of D2D resource information further indicates a transmission power parameter available for the D2D communication, and
the instruction information further instructs a use of a transmission power parameter indicated by specific D2D resource information, out of the plurality of D2D resource information.

10. The base station according to claim 9, further comprising: a controller configured to determine a user terminal that performs the D2D communication in the cell and that gives a large interference to cellular communication, wherein
the transmitter transmits to the user terminal determined by the controller the dedicated control signal including the instruction information.

11. The base station according to claim 10, wherein the transmission power parameter indicated by the specific D2D resource information is set to be low in transmission power in the D2D communication as compared to a transmission power parameter indicated by D2D resource information other than the specific D2D resource information.

12. The base station according to claim 9, further comprising: a controller configured to determine a user terminal that performs the D2D communication in the cell and that does not give a large interference to cellular communication, wherein
the transmitter transmits to the user terminal determined by the controller the dedicated control signal including the instruction information.

13. The base station according to claim 12, wherein the transmission power parameter indicated by the specific D2D resource information is set to be high in transmission power in the D2D communication as compared to a transmission power parameter indicated by D2D resource information other than the specific D2D resource information.

14. A processor provided in a user terminal used in a mobile communication system that supports D2D communication that is direct Device-to-Device communication, wherein
a process of receiving, from a base station configured to manage a cell in which the user terminal exists, a broadcast control signal commonly applied to all the user terminals in the cell and a dedicated control signal dedicatedly applied to a user terminal in the cell, is executed,
the broadcast control signal includes a plurality of D2D resource information,
each of the plurality of D2D resource information indicates a radio resource available for the D2D communication, and
the dedicated control signal includes instruction information for instructing a use of a radio resource indicated by specific D2D resource information, out of the plurality of D2D resource information.

15. The processor according to claim 14, wherein each of the plurality of D2D resource information further indicates a transmission power parameter available for the D2D communication, and
the instruction information further instructs a use of a transmission power parameter indicated by specific D2D resource information, out of the plurality of D2D resource information.
